# EUROPÄISCHE PATENTSCHRIFT

(11) **EP 2 438 488 B1**
(45) Veröffentlichungstag und Bekanntmachung des Hinweises auf die Patenterteilung: **08.01.2014**
(21) Anmeldenummer: 10720435.6
(22) Anmeldetag: 27.05.2010
(51) Int. Cl.: G05B 19/04

(54) **VERFAHREN UND VORRICHTUNG ZUR STEUERUNG VON HILFSSTOFFEN BEI WERKZEUGMASCHINEN**
METHOD AND DEVICE FOR CONTROLLING AUXILIARY MATERIALS IN MACHINE TOOLS
PROCÉDÉ ET DISPOSITIF DE COMMANDE DES MATIÈRES CONSOMMABLES SUR DES MACHINES-OUTILS

(30) Priorität: 03.06.2009 DE 102009026656
(43) Veröffentlichungstag der Anmeldung: 11.04.2012
(73) Patentinhaber: Robert Bosch GmbH, 70442 Stuttgart (DE)
(72) Erfinder: VIERLING, Bernd, 71638 Ludwigsburg (DE); HAUG, Karsten, 70372 Stuttgart (DE)
(86) Internationale Anmeldenummer: PCT/EP2010/057348
(87) Internationale Veröffentlichungsnummer: WO 2010/139605

(56) Entgegenhaltungen:
- EP-A1- 1 911 548
- DE-A1-102007 016 326
- US-A- 4 186 529
- US-A1- 2008 213 056

## Beschreibung

### Stand der Technik

Die Erfindung betrifft ein Verfahren und eine Vorrichtung zur Steuerung von Hilfsstoffen bei Werkzeugmaschinen, betreffend die Zuführung von Kühl- und/oder Schmierstoffen, nach dem Oberbegriff des Hauptanspruchs und der nebengeordneten Ansprüche.

Die Medienversorgung von Werkzeugmaschinen, insbesondere die Kühl- und/oder Schmierstoffversorgung von zerspanenden Werkzeugmaschinen, stellt heute in an sich bekannter Weise einen Bestandteil der numerischen Steuerung der Werkzeugmaschine dar und wird in einer entsprechenden Programmiersprache in der Werkzeugmaschine hinterlegt. Hierbei wir das allgemeine Maschinenmanagement in einem sogenannten M-Code oder mit M-Funktionen/Befehlen dargestellt und die Positionen bzw. Bahnkurven des Werkzeugs und die aktuellen Bearbeitungsstadien werden im sogenannten G-Code dargestellt.

Eine solche Steuerung einer Werkzeugmaschine ist beispielsweise aus der DE 693 28 266 T2 bekannt, bei der ein Kühlmittel durch entsprechende M-Befehle je nach Bearbeitungszustand im G-Code ein- und ausgeschaltet wird.

Bei den bekannten Steuerungen für insbesondere spanende Werkzeugmaschinen kann es jedoch vorkommen, dass oft weit mehr Kühl- oder Schmierstoffe an den Bearbeitungsprozess herangebracht wird als dieser eigentlich für eine ausreichende Kühlung oder das Wegschwemmen von Spanen benötigt. Dieser überflüssige Volumenstrom muss dann auch gereinigt und gekühlt werden, was zu hohen Energiekosten führt. Außerdem ist dann notwendigerweise oft auch das Leitungsnetz für die Kühl- und/oder Schmierstoffversorgung in der Summe überdimensioniert.

Für sich gesehen ist darüber hinaus aus der DE 10 2007 016 326 A1 bekannt, dass zur Kühlmittelversorgung spanender Werkzeuge der Druck des Kühlmittels erfasst wird und mit hinterlegten Referenzwerten für den jeweiligen Betriebszustand des Werkzeugs verglichen wird. Es kann dann mit einem Regelventil eine Druck- und/oder Mengenregelung des Kühlmittels durchgeführt werden.

Aus der US 2008/0213056 A1 ist ein Verfahren zur Steuerung von Hilfsstoffen bei Werkzeugmaschinen mit den wesentlichen Merkmalen des Oberbegriffs des Anspruchs 1 bekannt geworden. Mittels des bekannten Verfahrens lässt sich in Abhängigkeit von der Position eines Bohrwerkzeugs ein Kühlmittelfluss beeinflussen.

Darüber hinaus ist es aus der US 4,186,529 bekannt, den zeitlichen Verlauf sowie die Menge von Kühlmittel im Bereich eines Fräsers in Abhängigkeit von der augenblicklichen Werkzeugposition zu beeinflussen. Das bekannte Verfahren umfasst darüber hinaus die Ansteuerung unterschiedlicher Kühlmittelauslässe, in Abhängigkeit von der Werkstück/Werkzeugposition.

### Offenbarung der Erfindung

Ausgehend von dem dargestellten Stand der Technik liegt der Erfindung die Aufgabe zugrunde, ein Verfahren zur Steuerung von Hilfsstoffen bei Werkzeugmaschinen nach dem Oberbegriff des Anspruchs 1 derart weiterzubilden, dass eine besonders genaue Bestimmung des erforderlichen Hilfsstoffsvolumens ermöglicht wird. Diese Aufgabe wird erfindungsgemäß bei einem Verfahren zur Steuerung von Hilfsstoffen bei Werkzeugmaschinen mit den Merkmalen des Anspruchs 1 dadurch gelöst, dass das Abtragsverhalten aus der Drehzahl und/oder sonstiger mechanischer und physikalischer Kenngrößen des Werkzeugs im G-Code und den Materialeigenschaften des zu bearbeitenden Werkstücks jeweils zu einem Zeitpunkt bestimmt wird und aus dem so bestimmten Abtrag über einen vorgegebenen Zeitraum das Abtragsverhalten über der Zeit für jeden Ort des zu bearbeitenden Werkstücks modelliert wird. Mit anderen Worten gesagt bedeutet dies, dass es erfindungsgemäß vorgesehen ist, sowohl die spezifischen Werkzeugeigenschaften, als auch die spezifischen Werkstückeigenschaften zu jedem Zeitpunkt der Bearbeitung eines Werkstücks zu berücksichtigen und dadurch über den zeitlichen Verlauf der Werkstückbearbeitung ein hochpräzises Bild über das Abtragsverhalten gewinnen zu können, aus dem wiederum ein bestimmter Kühl- und/oder Schmierstoffbedarf hervorgeht.

Vorteilhafte Weiterbildungen des erfindungsgemäßen Verfahrens sind in den Unteransprüchen aufgeführt.

Zur Modellierung des Abtragsverhaltens kann auch auf einfache Weise ein dreidimensionales CAD-Modell des zu bearbeiteten Werkstücks herangezogen werden, wobei die Geometrien, die zwischen den über das CAD-Modell festgelegten Ausgangs- und Zielgeometrien befinden aus der Bahnbewegung des Werkzeugs berechnet werden können. Es kann zur Modellierung des Abtragsverhaltens ein mathematisches Abtragsmodell oder ein gemessenes Kennfeld herangezogen werden.

Aus dem so ermittelten Abtragsverhalten am zu bearbeiteten Werkstück kann gemäß der Erfindung dann ein Temperaturverhalten des zu bearbeiteten Werkstücks über der Zeit (t) und die Wärmeverteilung für jeden Ort (x,y,z) des zu bearbeiteten Werkstücks modelliert werden und innerhalb vorgegebener Grenzwerte kann dann durch Integration und Spitzenwertbetrachtung ein Kühlbedarf zur Gewinnung der Regelgröße für den Volumenstrom des Hilfsstoffs, insbesondere des Kühl- und/oder Schmierstoffs, ermittelt werden.

Die erfindungsgemäße Vorrichtung zur Durchführung des zuvor beschriebenen Verfahrens zeigt ebenfalls die zuvor aufgeführten Vorteile.

Weiterhin ist noch in vorteilhafter Weise ein Computerprogrammprodukt gespeichert auf einem computerverwendbaren Medium in der numerischen Steuerung anwendbar, das computerlesbare Programmmittel umfasst, welche bei Ausführung des Computerprogrammprodukts auf einem Mikroprozessor mit zugehörigen Speichermitteln oder auf einem Computer diesen zur Durchführung des zuvor beschriebenen Verfahrens oder zum Betrieb der Vorrichtung veranlassen.

Besonders vorteilhaft ist bei der Erfindung, dass auch die bisher üblichen NC-Programme zur numerischen Steuerung von Werkzeugmaschinen im wesentlichen unverändert weiterverwendet werden können. Die erfindungsgemäße bedarfsgerechte Nachregelung des Volumenstroms des Hilfsstoffs erfolgt automatisch durch die beschriebene Analyse des G-Codes, wozu nur ein geringer zusätzlicher Engineering-Aufwand erforderlich ist.

### Kurze Beschreibung der Zeichnung

Die Erfindung wird nachfolgend anhand des in der Figur der Zeichnung gezeigten Ausführungsbeispiels erläutert. Dabei zeigen:
Figur 1 ein schematisches Blockschaltbild eines Verfahrens zur Steuerung von Hilfsstoffen bei Werkzeugmaschinen nach dem Stand der Technik.
Figur 2 ein schematisches Blockschaltbild eines erfindungemäßen Verfahrens zur Steuerung von Hilfsstoffen bei Werkzeugmaschinen, insbesondere bei der Zuführung von Kühl- und/oder Schmierstoffen.

### Weg zu Ausführung der Erfindung

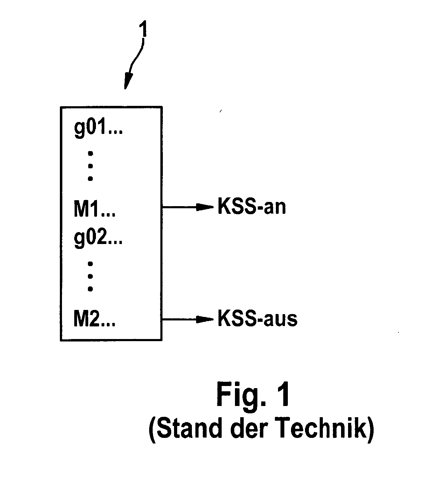

In Figur 1 ist schematisch ein Verfahren zur Steuerung von Hilfsstoffen bei Werkzeugmaschinen nach dem Stand der Technik gezeigt. Im Block 1 sind auszugsweise Teile eines NC-Programms zur numerischen Steuerung einer hier nicht näher erläuterten Werkzeugmaschine, zum Beispiel mit einem Fräser als Werkzeug, gezeigt. In der Senkrechten im Block 1 sind einige G-Codes g01..., etc. aufgelistet, die zum Beispiel die Bahnkurven des Werkzeugs und die aktuellen Bearbeitungsstadien zu bestimmten Zeitpunkten darstellen.

Es folgt dann im senkrechten Verlauf nach der Figur 1 ein M-Code M1 für die allgemeinen Maschinenfunktionen, wobei hier rechts außen am Block 1 angedeutet ist, dass dadurch die Kühl- und Schmiermittelversorgung KSS eingeschaltet wird. Weiter folgen im senkrechten Verlauf im Block 1 weitere G-Codes go2.... etc., bis wieder ein M-Code M2 folgt, zu dem hier rechts außen am Block 1 angedeutet ist, dass dadurch die Kühlund Schmiermittelversorgung KSS ausgeschaltet wird, ohne dass zwischendurch eine weitere Beeinflussung des Volumenstroms der Kühl- und Schmiermittelversorgung KSS erfolgt. Zwischen dem An- und Abschalten erfolgt die Zerspanung über eine Bahnbewegung des Fräsers als Werkzeug relativ zum Werkstück gemäß der G-Codes go2.....etc..

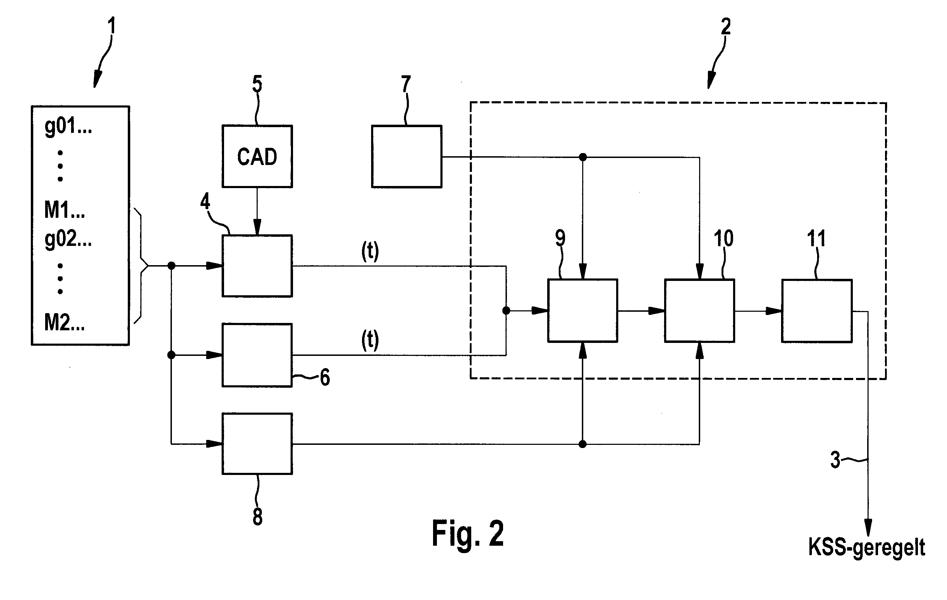

Aus Figur 2 ist ersichtlich, wie mit einem ansonsten unveränderten NC-Programm nach dem Block 1 zwischen dem Ein- und Abschalten der Volumenstrom der Kühl- und Schmiermittelversorgung KSS wird mittels einer anhand Block 2 nachfolgend beschriebenen Modellierung des Kühl- und Schmiermittelbedarfs der Volumenstrom am Ausgang 3 die Kühl- und Schmiermittelversorgung KSS geregelt mit einer entsprechenden Regelgröße nachgeregelt wird.

Der Kühl- und Schmiermittelbedarf wird erfindungsgemäß zwischen den M-Codes M1 für KSS-an und M2 für KSS-aus automatisch aus der Bahnbeschreibung der Bearbeitungskurve im G-Code und bekannten Prozessparametern modellgestützt nach dem Block 2 abgeleitet.

Mit dem Block 4 ist angedeutet, wie dazu zunächst aus dem G-Code die Bahnbewegung extrahiert wird. Zusammen mit dreidimensionalen CAD-Modellen des zu bearbeitenden Werkstücks nach Block 5 erhält man hieraus zu jedem Zeitpunkt t ein exaktes Abbild der momentanen Werkstückgeometrie. Hierzu ist zum Beispiel das Rohwerkstück und das Zielwerkstück jeweils als dreidimensionales CAD-Modell hinterlegt. Die Werkstückgeometrien dazwischen werden über die Bahnbewegung des Werkzeugs berechnet.

Als weitere Eingangsgrößen für die Modellierung nach dem Block 2 werden die wichtigsten Parameter über die Werkstückbearbeitung, hier den Zerspanungsprozess, mitberücksichtigt. Dies sind im Wesentlichen zum Beispiel die Spindeldrehzahl des Werkzeugs (Block 6), die hier ebenfalls aus dem M-Code zu einem bestimmten Zeitpunkt t ermittelbar ist, und die bekannten Materialeigenschaften des Werkstücks gemäß Block 7. Zusammen mit Informationen aus dem G-Code über das verwendete Werkzeug gemäß Block 8 lässt sich nun das Abtragsverhalten im Block 9 zu jedem Zeitpunkt t modellieren.

Für diese Modellierung können sowohl physikalische Abtragsmodelle als auch gemessene Kennfelder genutzt werden. Solche physikalischen Abtragsmodelle bilden Vorgänge an der Schneide des Werkstücks ab und differenzieren je nach Kontaktfläche zischen Übergang der Wärme ins Werkstück in den Span und die umgebende Luft. Gemessene Kennfelder beruhen dagegen auf Messungen typischer Zerspanaufgaben und der Interpolation zwischen diesen Messungen.

Aus dem Abtragsverhalten (Block 9) über der Zeit t lässt sich nun wie folgt das Temperaturverhalten gemäß Block 10 modellieren. Über das Abtragsverhalten (Block 9) ist der Wärmeeintrag in das Werkstück und die in die Umgebung abgestrahlte Wärme bekannt. Der Wärmeeintrag in das Werkstück diffundiert nun nach dem Diffusionsgesetz ins Werkstück, wobei sich dieser Diffusionsprozess relativ einfach modellieren lässt, da der Wärmeeintrag, der Ort x,y,z und Gesamtgeometrie des Werkstücks zu jedem Zeitpunkt t bekannt sind. Hieraus ergibt sich die Wärmeverteilung zu jedem Zeitpunkt t und jedem Ort x,y,z. Über vorgegebene Grenzwerte kann dann hieraus der Kühlbedarf nach Block 11 durch Integration und Spitzenwertbetrachtung berechnet werden.

Dieser Bedarf des Volumenstroms des Kühl- und Schmiermittelbedarfs kann über den Ausgang 3 (KSS geregelt) an die regelbare Kühl- und Schmiermittelversorgung KSS weitergeleitet werden, die damit dann den Bearbeitungsprozess versorgt.

## Patentansprüche

1. Verfahren zur Steuerung von Hilfsstoffen bei Werkzeugmaschinen, bei dem mittels einer numerischen Steuerung über Maschinenfunktionen als M-Code ein Ein- und Abschalten (KSS-an, KSS-aus) des Volumenstroms des Hilfsstoffes erfolgt, bei dem während des Fließens des Volumenstroms aus der in der numerischen Steuerung bekannten Bahn- oder Bearbeitungsposition als G-Code eines Werkzeugs der Werkzeugmaschine und aus aktuellen physikalischen Parametern des Werkzeugs und/oder des bearbeiteten Werkstücks eine Regelgröße (KSS-geregelt) für den Volumenstrom des Hilfsstoffs gewonnen wird, wobei bei spanenden Werkzeugmaschinen Kühlund/oder Schmierstoffe (KSS) als Hilfsstoffe zugeführt werden, und wobei die aktuellen physikalischen Parameter insbesondere bei spanender Bearbeitung das Abtragsverhalten (9) am zu bearbeitenden Werkstück betreffen,
**dadurch gekennzeichnet,**
**dass** das Abtragsverhalten (9) aus der Drehzahl und/oder sonstiger mechanischer uns physikalischer Kenngrößen (6) des Werkzeugs im G-Code und den Materialeigenschaften (7) des zu bearbeitenden Werkstücks jeweils zu einem Zeitpunkt (t) bestimmt wird und aus dem so bestimmten Abtrag über einen vorgegebenen Zeitraum das Abtragsverhalten (9) über der Zeit (t) für jeden Ort (x,y,z) des zu bearbeitenden Werkstücks modelliert wird.

2. Verfahren nach Anspruch 1,
**dadurch gekennzeichnet,**
**dass** zur Modellierung des Abtragsverhaltens (9) ein dreidimensionales CAD-Modell (5) des zu bearbeitenden Werkstücks herangezogen wird, wobei sich die Geometrien, die zwischen den über das CAD-Modell (5) festgelegten Ausgangs- und Zielgeometrien befinden, aus der Bahnbewegung des Werkzeugs berechnet werden.

3. Verfahren nach Anspruch 1,
**dadurch gekennzeichnet,**
**dass** zur Modellierung des Abtragsverhaltens (9) ein mathematisches Abtragsmodell herangezogen wird.

4. Verfahren nach Anspruch 1,
**dadurch gekennzeichnet,**
**dass** zur Modellierung des Abtragsverhaltens (9) ein gemessenes Kennfeld herangezogen wird.

5. Verfahren nach einem der Ansprüche 1 bis 4,
**dadurch gekennzeichnet,**
**dass** aus dem ermittelten Abtragsverhalten (9) am zu bearbeiteten Werkstück ein Temperaturverhalten (10) des zu bearbeiteten Werkstücks über die Zeit (t) und die Wärmeverteilung für jeden Ort (x,y,z) des zu bearbeiteten Werkstücks modelliert wird.

6. Verfahren nach Anspruch 5,
**dadurch gekennzeichnet,**
**dass** innerhalb vorgegebener Grenzwerte durch Integration und Spitzenwertbetrachtung ein Kühlbedarf (11) zur Gewinnung der Regelgröße (KSS-geregelt) für den Volumenstrom des Hilfsstoffs, insbesondere des Kühlund/oder Schmierstoffs (KSS), ermittelt wird.

7. Vorrichtung zur Durchführung eines Verfahrens nach einem der Ansprüche 1 bis 6,
**dadurch gekennzeichnet,**
**dass** bei einer spanenden numerisch gesteuerten Werkzeugmaschine eine numerische Steuerungseinheit vorhanden ist, die mit einem speicherprogrammierbaren Steuerungsprogramm versehen ist, sodass zwischen dem Ein- und Ausschalten (KSS-an. KSS-aus) des Volumenstroms von Kühl- und/oder Schmierstoffen (KSS) als Hilfsstoffe im M-Code mittels einer Regelanordnung eine Regelung des Volumenstroms in Abhängigkeit von den Bahnpositionen des Werkzeugs und dem Abtragsverhalten (9) am zu bearbeiteten Werkstück aus dem G-Code der numerischen Steuerung erfolgt, wobei das Abtragsverhalten (9) aus der Drehzahl und/oder sonstiger mechanischer und physikalischer Kenngrößen (6) des Werkzeugs im G-Code und den Materialeigenschaften (7) des zu bearbeitenden Werkstücks jeweils zu einem Zeitpunkt (t) bestimmt wird und aus dem so bestimmten Abtrag über einen vorgegebenen Zeitraum das Abtragsverhalten (9) über der Zeit (t) für jeden Ort (x,y,z) des zu bearbeitenden Werkstücks modelliert wird.

8. Computerprogrammprodukt gespeichert auf einem computerverwendbaren Medium, umfassend computerlesbare Programmmittel, welche bei Ausführung des Computerprogrammprodukts auf einem Mikroprozessor mit zugehörigen Speichermitteln oder auf einem Computer diesen zur Durchführung eines Verfahrens nach einem der Ansprüche 1 bis 6 oder zum Betrieb einer Vorrichtung nach Anspruch 7 veranlassen.

## Claims

1. Method for controlling auxiliary materials in the case of machine tools, in which the volumetric flow of the auxiliary material is switched on and off (coolant/lubricant on, coolant/lubricant off) by means of a numerical control using machine functions as M code, and in which as the volumetric flow is flowing a controlled variable (coolant/lubricant controlled) for the volumetric flow of the auxiliary material is obtained from the path position or machining position, known in numerical control as G code, of a tool of the machine tool and from current physical parameters of the tool and/or the workpiece being machined, in the case of cutting machine tools coolants and/or lubricants (C/Ls) being fed as auxiliary materials, and the current physical parameters relating, particularly in the case of cutting machining, to the removal performance (9) at the workpiece to be machined, **characterized in that** the removal performance (9) is respectively determined at an instant (t) from the rotational speed and/or other mechanical and physical parameters (6) of the tool in the G code and from the material properties (7) of the workpiece to be machined, and the removal performance (9) over the time (t) for each location (x, y, z) of the workpiece to be machined is modelled from the removal thus determined over a prescribed time period.

2. Method according to Claim 1, **characterized in that** a three-dimensional CAD model (5) of the workpiece to be machined is used to model the removal performance (9), the geometries, which are located between the basic geometries and target geometries laid down via the CAD model (5), being calculated from the path movement of the tool.

3. Method according to Claim 1, **characterized in that** a mathematical removal model is used to model the removal performance (9).

4. Method according to Claim 1, **characterized in that** a measured characteristic map is used to model the removal performance (9).

5. Method according to one of Claims 1 to 4, **characterized in that** a temperature characteristic (10) over the time (t) of the workpiece to be machined and the thermal distribution for each location (x, y, z) of the workpiece to be machined are modelled from the removal performance (9) determined on the workpiece to be machined.

6. Method according to Claim 5, **characterized in that** a cooling requirement (11) for obtaining the controlled variable (coolant/lubricant-controlled) for the volumetric flow of the auxiliary material, in particular the coolant and/or lubricant (C/L), is determined within prescribed limit values by integration and peak value consideration.

7. Device for carrying out a method according to one of Claims 1 to 6, **characterized in that** in the case of a cutting numerically controlled machine tool a numerical control unit is present which is provided with a programmable control program such that between the switching on and off (coolant/lubricant on, coolant/lubricant off) of the volumetric flow of coolants and/or lubricants (C/Ls) as auxiliary materials the volumetric flow is controlled in the M code by means of a control arrangement as a function of the path positions of the tool and the removal performance (9) on the workpiece to be machined from the G code of the numerical control, the removal performance (9) being respectively determined at an instant (t) from the rotational speed and/or other mechanical and physical parameters (6) of the tool in the G code and from the material properties (7) of the workpiece to be machined, and the removal performance (9) over the time (t) for each location (x, y, z) of the workpiece to be machined being modelled from the removal thus determined over a prescribed time period.

8. Computer program product stored on a computerusable medium, comprising computer-readable programming means which, when the computer program product is executed on a microprocessor with associated storage means or on a computer, prompt said means or computer to carry out a method according to one of Claims 1 to 6 or to operate a device according to Claim 7.

## Revendications

1. Procédé de contrôle de substances auxiliaires sur des machines-outils, dans lequel un branchement et un débranchement (KSS-an, KSS-aus) du débit de substances auxiliaires s'effectue au moyen d'une commande numérique par l'intermédiaire de fonctions de machines présentant la forme d'un code M et dans lequel, à partir de la position de la piste ou du traitement connue par la commande numérique et formant un code G pour un outil de la machine-outil et à partir de paramètres physiques actualisés de la pièce et/ou de la pièce traitée, une grandeur de régulation (KSS-régulée) du débit volumique de substances auxiliaires est obtenue pendant l'écoulement du débit volumique,
les substances auxiliaires apportées étant des substances de refroidissement et/ou de lubrification (KSS) dans le cas de machines-outils à enlèvement de matière, les paramètres physiques actualisés concernant, en particulier pour le traitement d'enlèvement de matière, l'évolution (9) de l'enlèvement de matière sur la pièce à traiter, **caractérisé en ce que**
l'évolution (9) de l'enlèvement de matière est déterminée à partir de la vitesse de rotation et/ou d'autres grandeurs caractéristiques mécaniques et physiques (6) de l'outil sous la forme d'un code G et à partir des propriétés (7) du matériau de la pièce à traiter à un instant (t) et
**en ce qu'**à partir de l'enlèvement de matière ainsi déterminé pendant une durée prédéterminée, l'évolution (9) de l'enlèvement de matière est modélisée en fonction du temps (t) pour chaque emplacement (x, y, z) de la pièce à traiter.

2. Procédé selon la revendication 1, **caractérisé en ce que** pour modéliser l'évolution (9) de l'enlèvement de matière, il utilise un modèle CAO tridimensionnel (5) de la pièce à traiter, les géométries situées entre les géométriques initiales et les géométriques visées définies par l'intermédiaire du modèle CAO (5) étant calculées à partir du déplacement de l'outil sur sa piste.

3. Procédé selon la revendication 1, **caractérisé en ce qu'**il utilise un modèle mathématique de l'enlèvement de matière pour modéliser l'évolution (9) de l'enlèvement de matière.

4. Procédé selon la revendication 1, **caractérisé en ce qu'**il utilise un champ de caractéristiques mesurées pour modéliser l'évolution (9) de l'enlèvement de matière.

5. Procédé selon l'une des revendications 1 à 4, **caractérisé en ce qu'**à partir de l'évolution (9) déterminée pour l'enlèvement de matière sur la pièce à traiter, l'évolution (10) de la température de la pièce à traiter est modélisée en fonction du temps (t) et de la distribution de chaleur en chaque emplacement (x, y, z) de la pièce à traiter.

6. Procédé selon la revendication 5, **caractérisé en ce que** par interaction et prise en compte des valeurs de pointe, les besoins de refroidissement (11) sont déterminés à l'intérieur de valeurs limites prédéterminées pour obtenir la grandeur de régulation (KSS-régulée) du débit volumique de substances auxiliaires et en particulier de la substance de refroidissement et/ou de lubrification (KSS).

7. Dispositif en vue de la mise en oeuvre d'un procédé selon l'une des revendications 1 à 6, **caractérisé en ce que** pour une machine-outil d'enlèvement de matière à commande numérique, une unité numérique de commande est prévue et est dotée d'un programme de commande programmable en mémoire de telle sorte qu'entre le branchement et le débranchement (KSS-an, KSS-aus) du débit volumique de substances de refroidissement et/ou de lubrification (KSS) servant de substances auxiliaires, une régulation du débit volumique s'effectue en code M au moyen d'un ensemble de régulation à partir du code G de la commande numérique et en fonction de la position de l'outil sur sa piste et de l'évolution (9) d'enlèvement de matière de la pièce à traiter,
**en ce que** l'évolution (9) de l'enlèvement de matière est déterminée à partir de la vitesse de rotation et/ou d'autres grandeurs caractéristiques mécaniques et physiques (6) de l'outil sous la forme d'un code G et à partir des propriétés (7) du matériau de la pièce à traiter à un instant (t) et
**en ce qu'**à partir de l'enlèvement de matière ainsi déterminé pendant une durée prédéterminée, l'évolution (9) de l'enlèvement de matière est modélisée en fonction du temps (t) pour chaque emplacement (x, y, z) de la pièce à traiter.

8. Produit de programme informatique conservé sur un support utilisable par ordinateur, comprenant des moyens de programmation lisibles par ordinateur et qui, lors de l'exécution du produit de programme informatique sur un microprocesseur doté de moyens de mémoire ou sur un ordinateur, permettent à ces derniers d'exécuter un procédé selon l'une des revendications 1 à 6 ou de conduire un dispositif selon la revendication 7.
